(19) Europäisches Patentamt
European Patent Office
Office européen des brevets

(11) **EP 4 156 344 A1**

(12) **EUROPEAN PATENT APPLICATION**
published in accordance with Art. 153(4) EPC

(43) Date of publication:
**29.03.2023 Bulletin 2023/13**

(21) Application number: **22797243.7**

(22) Date of filing: **24.02.2022**

(51) International Patent Classification (IPC):
**H01M 4/70** (2006.01)    **H01M 4/134** (2010.01)
**H01M 10/054** (2010.01)

(52) Cooperative Patent Classification (CPC):
Y02E 60/10

(86) International application number:
**PCT/CN2022/077642**

(87) International publication number:
**WO 2022/267503 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.06.2021 CN 202110742608**

(71) Applicant: **Contemporary Amperex Technology
Co., Limited
Ningde, Fujian 352100 (CN)**

(72) Inventor: **ZENG, Yuqun
Fujian 352100 (CN)**

(74) Representative: **Ziebig Hengelhaupt Intellectual
Property Attorneys
Patentanwaltsanwaltskanzlei PartGmbB
Leipziger Straße 49
10117 Berlin (DE)**

(54) **ELECTROCHEMICAL APPARATUS AND ELECTRONIC APPARATUS**

(57) The present application refers to an electrochemical device and electronic device, including a positive electrode plate and a negative electrode plate, wherein the positive electrode plate includes a positive electrode current collector and a positive electrode active material, and the negative electrode plate includes a negative electrode current collector and a group of step coatings disposed on surface of the negative electrode current collector close to the positive electrode plate, and a weight of the positive electrode active material per unit area on the positive electrode current collector is $g_a$ expressed in g/cm$^2$, a gram capacity of the positive active material is $C_a$ expressed in mAh/g, a thickness of the step coating is L expressed in $\mu$m, and a theoretical volume gram capacity of sodium metal is X expressed in mAh/cm$^3$, and L satisfies Formula (I):

$$L = \frac{C_a * g_a}{X} * 10000 * (1 \pm 0.1) \qquad \text{(I)}.$$

In this application, by pre-constructing a "step coating" with a certain thickness on a surface of the side of the negative electrode current collector close to the positive electrode active material, a space occupied by the active layer after deposition of sodium on the current collector is reserved, thereby avoiding the distortion and deformation of structure of the battery core due to the huge volume expansion caused by the deposition of sodium on the side of the negative electrode and thus improving the safety performance of battery.

Fig. 1

**Description**

**CROSS-REFERENCE TO RELATED APPLICATION**

This application claims priority to Chinese Patent Application No. 202110742608.1, entitled "Electrochemical devices, electronic devices" and filed on June 26, 2021, which is incorporated herein by reference in its entirety.

**TECHNICAL FIELD**

The present application relates to the technical field of secondary batteries, in particular to electrochemical devices and electronic devices.

**BACKGROUND**

With the gradual expansion of the application of lithium-ion battery technology in markets such as consumer electronics, electric vehicles, and energy storage markets, the problem of insufficient lithium resources has begun to attract more and more attentions. Na-based batteries have been gradually attracting attention owing to the sufficiently high abundance of sodium on the earth, and have an important strategic position in cost-controlling application fields such as energy storage. Confined by higher reduction potential and larger relative molecular mass of metal sodium than those of metal lithium, sodium-ion batteries have significantly lower energy density than lithium-ion batteries, despite of similar working principles; the larger ionic radius of sodium ion also result in larger volume expansion accompanying the intercalation and deintercalation of sodium ion in positive and negative electrode materials, and thus lead to a decrease in the cycle reversibility of the batteries, which significantly restricts the application and promotion of Na-ion batteries. With the development and progress of technologies of the electrolyte and additive therein and the surface modification, the problem of sodium dendrite growth caused by uneven deposition on metal surface that has plagued academia for a long time has been significantly reduced, so that product safety performance is expected to be significantly improved, and that sodium metal negative electrode with high energy density re-enters public view. In order to further obtain higher energy density of battery cell, "anode-free" sodium metal batteries were also developed by *in situ* deposition of positive electrode materials into negative electrode current collectors and stripping of sodium metal at the first time. However, most of the reported technologies are mainly based on the results of button batteries having simple single-layer positive and negative electrodes, separator (electrolyte) structure, which is quite different from the practical multi-layer (wound/laminated) structure. Problems such as the huge volume change caused by the deposition or deintercalation of sodium in the negative electrode can easily cause severe deformation of interface of the electrode plate, which significantly affects the electrical performance of battery cell, whereas no effective solution has been proposed yet.

**SUMMARY**

In view of this, in order to overcome the above-mentioned defects, the present application provides electrochemical devices and electronic devices, capable of reserving the space to be occupied by the active layer after deposition of sodium on the current collector by pre-constructing a "step coating" with a certain thickness on both ends of the current collector, thereby avoiding the distortion and deformation of structure of the battery cell due to the huge volume expansion caused by the deposition of sodium on the side of the negative electrode.

In a first aspect, an embodiment of the present application provides an electrochemical device, including a positive electrode plate and a negative electrode plate, wherein the positive electrode plate includes a positive electrode current collector and a positive electrode active material, and the negative electrode plate includes a negative electrode current collector and a group of step coatings disposed on surface of the negative electrode current collector close to the positive electrode plate, and a weight of the positive electrode active material per unit area on the positive electrode current collector is $g_a$ expressed in g/cm², a gram capacity of the positive active material is $C_a$ expressed in mAh/g, a thickness of the step coating is L expressed in $\mu$m, and a theoretical volume gram capacity of sodium metal is X expressed in mAh/cm³, and L satisfies Formula (I):

$$L = \frac{C_a * g_a}{X} * 10000 * (1 \pm 0.1) \qquad \text{(I).}$$

In the above technical solution, the negative electrode plate adopts a negative electrode current collector and does not contain negative electrode active materials. During the first charge and discharge process, sodium metal is deposited from the positive electrode sodium ions on the negative electrode current collector *in-situ*. During the *in-situ* deposition process, due to relatively large ionic radius of sodium ions, volume expansion is a relatively large in intercalation or de-intercalation between the positive and negative electrodes. In the present application, a "step coating" with a certain thickness is pre-constructed on a surface of one side of the negative electrode current collector close to the positive electrode active material, to reserve the space to be occupied by the active layer after deposition of sodium on the current collector, thereby avoiding the distortion and deformation of structure of the battery cell due to the huge volume expansion caused by the deposition of sodium on the side of the negative electrode which will ultimately adversely affect the electrical performance of the cell.

Optionally, a width of the step coating is w expressed in mm, and a width of the negative electrode current collector is W expressed in mm, where $1 \leq w \leq 0.05W$.

Optionally, the width W of the negative electrode current collector is 100 mm to 1000 mm, and the width w of the step coating satisfies: $1mm \leq w \leq$ (from 5 mm to 50 mm).

Optionally, the step coating comprises at least one of the following technical features:

(1) The step coating includes a binder comprising at least one of polyvinylidene fluoride, sodium carboxymethyl cellulose, styrene-butadiene rubber, sodium alginate, lithium polyacrylate, sodium polyacrylate, polytetrafluoroethylene, polyimide, and polyurethane.
Optionally, the step coating comprises at least one of the following technical features:
(2) The step coating includes a binder and a ceramic material in a mass ratio of the binder to the ceramic material being (from 1 to 8) : (from 1 to 9);
(3) The step coating includes a binder and a ceramic material, and the ceramic material includes at least one of $Al_2O_3$, $\gamma$-AlOOH, $SiO_2$, SiC, $Si_3N_4$, AlN, BN, $Al_4C_3$;
(4) The step coating includes a binder and a ceramic material, and the binder comprises at least one of polyvinylidene fluoride, sodium carboxymethyl cellulose, styrene-butadiene rubber, sodium alginate, lithium/sodium polyacrylate, polytetrafluoroethylene, polyimide, and polyurethane.

Optionally, the negative electrode current collector includes at least one of a metal foil current collector, a metal foam current collector, a metal mesh current collector, a carbon felt current collector, a carbon cloth current collector and a carbon paper current collector.

Optionally, the negative electrode current collector includes an aluminum-based current collector comprising at least one of the following technical features:

(5) The aluminum-based current collector includes at least one of aluminum foil or aluminum alloy foil;
(6) The aluminum-based current collector is an aluminum-based composite current collector, and the aluminum-based composite current collector includes a polymer base film as well as aluminum foils and/or aluminum alloy foils formed on both sides of the polymer base film;
(7) The aluminum-based current collector is an aluminum-based composite current collector, and the aluminum-based composite current collector includes a polymer base film as well as aluminum foils and/or aluminum alloy foils formed on both sides of the polymer base film, and the polymer base film is any one of polyamide, polyethylene terephthalate, polyimide, polyethylene, polypropylene, polystyrene, polyvinyl chloride, acrylonitrile-butadiene-styrene copolymer, polybutylene terephthalate, polyparaphenylene terephthalamide, poly(ethylene-co-propylene), polyoxymethylene, epoxy resin, phenolic resin, polytetrafluoroethylene, polyvinylidene fluoride, silicone rubber, and polycarbonate.

Optionally, the aluminum-based current collector has a surface roughness of from 0.3 $\mu$m to 1.5 $\mu$m.

Optionally, the distance between the two step coatings is greater than the width of the positive electrode active material, and the two step coatings are not directly opposite to the positive electrode active material.

Optionally, the positive active material includes at least one of sodium transition metal oxides, polyanionic compounds, and Prussian blue compounds.

Optionally, the step coating can be formed by any one of transfer coating, extrusion coating and spray coating.

Optionally, the space formed by the negative electrode current collector and the step coating is used for accommodating the sodium source de-intercalated from the positive electrode plate.

Optionally, the space formed by the negative electrode current collector and the step coating is of a basin shape.

In the second aspect, an embodiment of the present application provides an electronic device comprising the electrochemical device according to the first aspect of the present application.

The beneficial effects in this application are as follows:

(1) In the anode-free electrochemical device of this application, negative electrode current collector is directly used as a negative electrode (an anode), in which the negative electrode active material is formed *in situ* by deposition of positive electrode active material and stripping of sodium de-sodium at the first time, and a "step coating" with a certain thickness is pre-constructed on a surface of one side of the negative electrode current collector close to the positive electrode active material to reserve the space occupied by the active layer after deposition of sodium on the current collector, thereby avoiding the distortion and deformation of structure of the battery cell due to the huge volume expansion caused by the deposition of sodium on the side of the negative electrode. The distortion and deformation will ultimately adversely affect the electrical performance of the battery cell.

(2) In this application, metal sodium is deposited on the surface of the negative electrode current collector during the first charge, and is converted into sodium ions which return to the positive electrode during the discharge process, thereby forming a cyclic charge and discharge process. Since the metal sodium is generated in the subsequent cycle process, the battery has no voltage before being charged for the first time, so it can be stored for a long time without self-discharge. Even if the battery is short-circuited, no current will be generated, which is extremely safe. Since no negative electrode material is present and only negative electrode current collector is used, anode-free batteries can have higher energy density than that with metal sodium negative electrode plate.

## DESCRIPTION OF THE DRAWING

The present application will be further described below in conjunction with the accompanying drawings and examples.

Fig. 1 is a schematic structural diagram of a battery of the present application;
Fig. 2 is a schematic structural diagram of a comparative example without a step coating described in the application;
Fig. 3 is a schematic structural diagram of a comparative example with volume expansion of sodium metal in the present application.

In the drawings: 100 represents a positive current collector; 200 represents a positive active material; 300 represents a separator; 400 represents a step coating; 500 represents a negative current collector.

## DETAILED DESCRIPTION

In order to make the object, technical solution, and technical effects of the present application clearer, the present application will be further described in detail below in conjunction with embodiments. It should be understood that the embodiments described in the present description are merely used to illustrate the present application, but not intended to limit the present application.

The following descriptions are related to preferred implementations of the embodiments of the present application. It should be pointed out that without departing from the principles of the embodiments of the present application, several improvements and modifications can be made by those skilled in the art. These improvements and modifications should also be regarded as falling within the protection scope of the embodiments of the present application.

The terms used in the embodiments of the present application are only for the purpose of describing specific embodiments, and are not intended to limit the present application. As used in the embodiments of this application and the appended claims, the singular forms "a," "the," and "the" are intended to include the plural forms as well, unless the context clearly dictates otherwise.

It should be understood that the term "and/or" as used herein is only an association relationship to describe the associated objects, indicating that there can be three kinds of relationships. For example, "A and/or B" may represents three kinds of relationships, including A alone, B alone, and both A and B at the same time. In addition, the character "/" as used herein generally indicates that the related objects are in an "or" relationship.

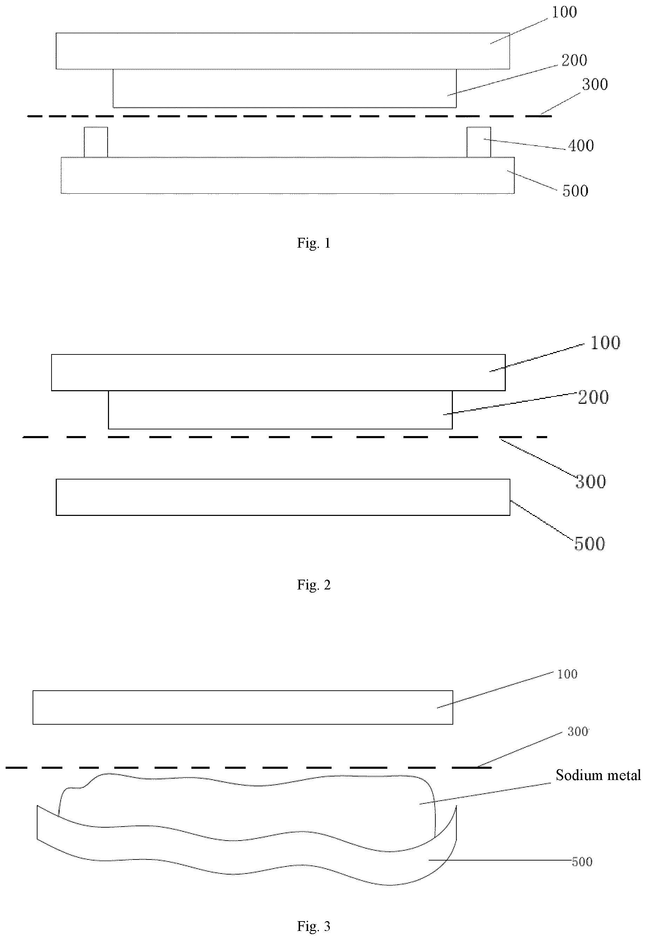

As shown in Fig. 1, an embodiment of the present application provides an electrochemical device, including a positive electrode plate and a negative electrode plate, wherein the positive electrode plate includes a positive electrode current collector 100 and a positive electrode active material 200, and the negative electrode plate includes a negative electrode current collector 500 and a group of step coatings 400 disposed on surface of the negative electrode current collector 500 close to the positive electrode plate, and a weight of the positive electrode active material per unit area on the positive electrode current collector is $g_a$ expressed in g/cm², a gram capacity of the positive active material is $C_a$ expressed in mAh/g, and a thickness of the step coating is L expressed in $\mu$m, and L satisfies Formula (I):

$$L = \frac{C_a * g_a}{X} * 10000 * (1 \pm 0.1) \qquad (I).$$

In the above formula, the theoretical volumetric capacity of sodium metal is X mAh/cm³ = 1166mAh/g *

$0.97g/cm^3$, wherein 1166mAh/g is the theoretical reversible gram capacity of sodium metal, $0.97g/cm^3$ is the theoretical density of sodium metal. Through the constraint of the above Formula (I), the "basin-shaped" space constructed by the negative electrode current collector and the step coatings 400 on both ends can accommodate the volume of the sodium source de-intercalated from the positive electrode, avoiding the huge volume variation caused by sodium deposition. The coefficient $(1\pm0.1)$ in formula (I) takes into account the fluctuation and effect of thickness tolerance of the actual step coating 400 during the preparation process. In the case that the thickness of the step coating 400 is less than 90% of the theoretically calculated coating thickness, the "basin-shaped" space cannot accommodate all the sodium sources de-intercalated from the positive electrode, thus the volume expansion of the negative electrode plate is still relatively large, and the battery cell has poor structural stability, resulting in poor cycle performance of the battery cell. However, in the case that the thickness of the step coating 400 is greater than 110% of the theoretically calculated coating thickness, too much "basin-shaped" space will cause the reduction of the volumetric energy density of the cell. 10000 means the conversion between cm and $\mu$m.

Owing to the small size of the step coating 400, a micrometer is used in the present application to measure the thickness of the step coating 400, and a soft ruler with a minimum quantile of 0.5 mm is used to measure the width and spacing of the step coating 400.

In the above technical solution, a width of the step coating 400 is w expressed in mm, and a width of the negative electrode current collector 500 is W expressed in mm, where $1 \leq w \leq 0.05W$. Generally, the width W of the negative electrode current collector 500 is from 100 mm to 1000 mm, then the width of the step coating 400 is from 1 mm $\leq w \leq$ (from 5 mm to 50 mm). In the case that the width w of the step coating 400 is lower than 1 mm, the step coating of the electrode plate is too narrow and has insufficient strength, so that the step coating 400 of the electrode plate is easily damaged during preparation process of battery cell (winding/hot pressing, etc.), thereby losing the original design purpose. However, in the case that the width w of the step coating is higher than 50 mm, the space occupied by the step coating 400 in electrode plate is too large, which affects the volume energy density of the battery cell.

In the above technical solution, the step coating 400 can be a binder, or a combination of a binder and a ceramic material. The binder includes at least one of polyvinylidene fluoride, sodium carboxymethyl cellulose, styrene-butadiene rubber, sodium alginate, lithium polyacrylate, sodium polyacrylate, polytetrafluoroethylene, polyimide, and polyurethane. The ceramic material includes at least one of $Al_2O_3$, $\gamma$-AlOOH , $SiO_2$, SiC, $Si_3N_4$, AlN, BN, $Al_4C_3$. The mass ratio of the binder and the ceramic material is (from 1 to 8):(from 1 to 9), specifically, the mass ratio of the binder and the ceramic material can be 1:9, 1:5, 2:1, 5:1, 7:1, 8:1, etc. Both the binder and ceramic material are electronic insulating materials, and do not chemically react with sodium, so as to ensure that the sodium source de-intercalated from the positive electrode is preferentially deposited on the surface of the negative electrode current collector 500, rather than on the surface of the step coating 400, thereby avoiding additional consumption of the sodium source caused by the chemical reaction of the step coating 400. The additional consumption results in the loss of the battery capacity and the first Coulomb efficiency. The binder has good heat resistance, does not react chemically with the sodium source, and the binder can bond well with the current collector without need of adding additional reagents. The ceramic material has the advantages such as high melting point, high hardness, high abrasion resistance, and oxidation resistance, and can be combined with the binder for use as the step coating 400 to provide stable performance meanwhile the deformation is not easy to occur.

In the above technical solution, the step coating 400 can be formed by any one of transfer coating, extrusion coating and spray coating. Specifically, the binder material is first dissolved in a solvent, which is water or N-methylpyrrolidone, and then placed in a high-speed mixer under stirring evenly at a high speed, and the obtained slurry is injected into a transfer coater, extrusion coater or spray coater for coating/spraying and drying, to finally obtain the step coating 400. If the ceramic material needs to be added, the binder material is dissolved in the solvent, and then added together with the ceramic material into a high-speed mixer under stirring evenly at a high speed. Preferably, the step coating 400 is prepared by a transfer coating method, which can better control the dimensions of the step coating 400.

In the above technical solution, the negative electrode current collector 500 used in the negative electrode plate may include at least one of a metal foil current collector, a metal foam current collector, a metal mesh current collector, a carbon felt current collector, a carbon cloth current collector and a carbon paper current collector. Sodium ions do not form alloys with aluminum. Based on the consideration of reducing cost and reducing weight, in the present application, an aluminum-based composite current collector is preferably used, which has better ductility and is conducive to maintaining the integrity of the electrode during the sodium deposition/de-intercalation process. The aluminum-based current collector includes any one of aluminum foil, aluminum alloy foil and aluminum-based composite current collector. The aluminum-based composite current collector includes a polymer base film as well as and/or aluminum alloy foils formed on both sides of the polymer base film. Specifically, the aluminum-based composite current collector has a "sandwich" structure, the polymer base film is located in the middle, and aluminum foils are arranged on both sides of the polymer base film, or aluminum alloy foils are arranged on both sides of the polymer base film, or aluminum foil is arranged on one side of the polymer base film and, aluminum alloy foil is arranged on the other side. The polymer base film is any one of polyamide, polyethylene terephthalate, polyimide, polyethylene, polypropylene, polystyrene, polyvinyl chloride, acrylonitrile-butadiene-styrene copolymer, polybutylene terephthalate, polyparaphenylene terephthalamide, poly(ethylene-co-propylene), polyoxymethylene, epoxy resin, phenolic resin, polytetrafluoroethylene, polyvinylidene fluoride, silicone rubber, and polycarbonate. In the above technical solution, the aluminum-based current collector 500 may have a surface roughness of from 0.3 μm to 1.5 μm, and specifically, the surface roughness of the aluminum-based current collector 500 may be 0.3 μm, 0.4 μm, 0.5 μm, 0.6 μm, 0.7 μm, 0.8μm, 0.9μm, 1.0μm, 1.0μm, 1.2μm, 1.3μm,1.4μm, 1.5μm, etc., but not limied hereto. By controlling the surface roughness of the aluminum-based current collector 500 within the above ranges, it ensures good bonding force between the deposited sodium and the aluminum-based current collector 500. When the roughness is less than 0.3 μm, the surface of the aluminum-based current collector 500 is too smooth, the bonding force between the deposited sodium and the aluminum-based current collector 500 is insufficient, thereby resulting in high probability of peeling off and drop powder during use and the loss of contact with the conductive network and finally resulting in electrical insulation, which affects the capacity and cycle life of battery cell. When the roughness is greater than 1.5 μm, it is easy to cause uneven deposition of sodium at the local highly active tip sites, and it is more likely to form dendrites, resulting in the safety risk of the battery cell.

In the above technical solution, the distance between the two step coatings 400 is greater than the width of the positive electrode active material 200, and the two step coatings 400 are not directly opposite to the positive electrode active material 200, to ensure that during the first charging and stripping of sodium (de-sodiumization) process, sodium from the positive electrode active material 200 is deposited on the negative electrode current collector 500, rather than on the step coating 400, thereby avoiding the loss of the sodium source.

The electrochemical device of the present application may include any device in which an electrochemical reaction occurs, and specific examples thereof may include all kinds of primary batteries, secondary batteries, fuel cells, solar cells or capacitors. The electrochemical device is a sodium metal battery, and the battery may include at least one of soft pack, square aluminum case, square steel case, cylindrical aluminum case and cylindrical steel case batteries.

In some embodiments, the present application provides an electronic device comprising the aforementioned electrochemical device.

The use of the electrochemical device of the present application is not particularly limited, and the electrochemical device can be used in any electronic device known in the art. In some embodiments, the electrochemical device of the present application may be used in, but not limited to, notebook computers, pen input computers, mobile computers, e-book players, portable telephones, portable fax machines, portable copiers, portable printers, head-mounted stereos headphones, VCRs, LCD TVs, portable cleaners, portable CD players, mini discs, transceivers, electronic notepads, calculators, memory cards, portable recorders, radios, backup power, motors, automobiles, motorcycles, power-assisted bicycles, bicycles, lighting equipment, toys, game consoles, clocks, power tools, flashlights, cameras, large batteries for household use, energy storage and sodium ion capacitors, etc.

The positive electrode includes a positive electrode current collector 100 and a positive electrode active material 200, and specifically:

The positive active material 200 may include at least one of sodium transition metal oxides, polyanionic compounds, and Prussian blue compounds. In the sodium transition metal oxides, the transition metal may be one or more of Mn, Fe, Ni, Co, Cr, Cu, Ti, Zn, V, Zr and Ce. The sodium transition metal oxide is, for example, $Na_xMO_2$, where M is one or more of Ti, V, Mn, Co, Ni, Fe, Cr and Cu, wherein $0 < x \leq 1$. The polyanionic compound may include one or more of sodium vanadium trifluorophosphate $Na_3V_2(PO_4)_2F_3$, sodium vanadium fluorophosphate $NaVPO_4F$, sodium vanadium phosphate $Na_3V_2(PO_4)_3$, $Na_4Fe_3(PO_4)_2P_2O_7$, $NaFePO_4$, $Na_3V_2(PO_4)_3$. Prussian blue compounds are $Na_xM^1M^2(CN)_6$, where $M^1$ and $M^2$ are one or more of Fe, Mn, Co, Ni, Cu, Zn, Cr, Ti, V, Zr, and Ce, where $0 < x \leq 2$.

A binder and/or a conductive agent may also be added in the positive active material 200. There is no limitation on the type of the binder and the conductive agent in the application, which can be selected according to actual needs. For example, the above-mentioned binder may be one or more of polyvinylidene fluoride (PVDF), polytetrafluoroethylene (PTFE), polyacrylic acid (PAA), polyvinyl alcohol (PVA), and styrene-butadiene rubber (SBR), and the above-mentioned conductive agent may be one or more of graphite, superconducting carbon, acetylene black, carbon black, carbon nanotube, graphene and carbon nanofiber.

The material of the positive electrode current collector 100 is not limited, and would be determined by those skilled in the art according to actual needs, and a metal is preferably used, for example, a metal including but not limited to aluminum foil.

The positive electrode plate can be prepared according to the conventional methods in the art. Generally, the positive electrode active material 200 and the optional conductive agent and binder are dispersed in a solvent which is usually N-methylpyrrolidone (NMP) to form a uniform positive electrode slurry. The positive electrode slurry is applied on at least one surface of the positive electrode current collector 100, and after steps including drying and cold-pressing, the positive electrode plate is obtained.

Further, the electrochemical device further includes a separator 300, the separator 300 arranged between the positive electrode and the negative electrode to prevent short circuit. The material and shape of the separator 300 are not specially limited and would be determined by those skilled in the art according to actual needs.

In some embodiments, the separator 300 includes a substrate layer, and the substrate layer is a non-woven fabric, a membrane or a composite membrane with a porous structure. In some embodiments, the material of the substrate layer includes at least one of polyethylene, polypropylene, polyethylene terephthalate, and polyimide. In some embodiments, the material of the substrate layer includes polypropylene porous film, polyethylene porous film, polypropylene non-woven fabric, polyethylene non-woven fabric or polypropylene-polyethylene-polypropylene porous composite membrane.

In some embodiments, a surface treatment layer is provided on at least one surface of the substrate layer. In some embodiments, the surface treatment layer may be a polymer layer, an inorganic substance layer, or a layer formed of a mixed polymer and inorganic substance. In some embodiments, the polymer layer includes a polymer, and the material of the polymer includes at least one of polyamide, polyacrylonitrile, acrylate polymer, polyacrylic acid, polyacrylic salt, polyvinylpyrrolidone, polyvinyl ether, polyvinylidene fluoride, poly(vinylidene fluoride-hexafluoropropylene).

In some embodiments, the inorganic substance layer further comprises inorganic particles and a binder. In some embodiments, the inorganic particles include one or a combination of more of aluminum oxide, silicon oxide, magnesium oxide, titanium oxide, hafnium dioxide, tin oxide, ceria, nickel oxide, zinc oxide, calcium oxide, zirconium oxide, yttrium oxide, carbide silicon, boehmite, aluminum hydroxide, magnesium hydroxide, calcium hydroxide and barium sulfate.

In some embodiments, the binder includes one or a combination of more of polyvinylidene fluoride, copolymers of vinylidene fluoride-hexafluoropropylene, polyamide, polyacrylonitrile, polyacrylate, polyacrylic acid, polyacrylic salt, polyvinylpyrrolidone, polyvinyl ether, polymethyl methacrylate, polytetrafluoroethylene and poly hexafluoropropene.

Further, the electrochemical device further includes an electrolyte, and the electrolyte includes a sodium salt and an organic solvent. Specifically, the organic solvent in the electrolytic solution is not particularly limited, and the organic solvent may be an organic solvent commonly used in the electrolytic solution in the art. As an example, the organic solvent may be selected from at least one of ethylene carbonate, propylene carbonate, diethyl carbonate, dimethyl carbonate, ethyl methyl carbonate, propylene carbonate, methyl acetate, ethyl propionate, fluoroethylene carbonate ,ethyl ether, diethylene glycol dimetyyl ether, triethylene glycol dimethyl ether, tetraethylene glycol dimethyl ether, and methyl tert-butyl ether, and preferably ether solvents, to adjust deposition morphology of sodium ion, thereby inhibiting the massive growth of sodium dendrites. In the electrochemical device of the present application, the sodium salt in the electrolyte is not particularly limited, and the sodium salt may be a sodium salt commonly used in the art for the electrolyte. As an example, the sodium salt may be selected from at least one of sodium hexafluorophosphate, sodium bisfluorosulfonimide, sodium bistrifluoromethanesulfonimide, sodium trifluoromethanesulfonate, sodium tetrafluoroborate, sodium difluorophosphate, perchloric acid sodium and sodium chloride.

In the electrochemical device of the present application, in order to improve the performance of the electrolyte, suitable additives may also be added to the electrolyte.

In order to illustrate the technical effect of the step coating 400 in the present application, "anode-free" sodium batteries having step coatings 400 with different sizes were prepared in the present application, and compared with sodium metal anode-containing batteries and sodium ion batteries and "anode-free" sodium batteries which are free of step coating. The specific details of battery preparation are as follows:

Example 1

(1) Preparation of negative electrode: aluminum foil with a thickness of 12 $\mu$m was used as the negative electrode current collector, the roughness of the negative electrode current collector was 0.3 $\mu$m; polyvinylidene fluoride (PVdF) powder was dissolved in N-methylpyrrolidone (NMP), and after adding $Al_2O_3$, a high-speed mixer was used for stirring uniformly; the mass ratio of polyvinylidene fluoride (PVdF) and $Al_2O_3$ was 1:4; then a step coating 400 slurry was applied on both ends of the aluminum foil current collector using an extrusion coater and dried to obtain a negative electrode of sodium battery with the step coating 400. The step coating 400 had a thickness of 32 $\mu$m and a width of 3 mm, and the distance between the two step coatings 400 is 101 mm. The values of thickness and width of the step coating 400 and the dimensions of the two step coatings 400 were shown in Table 1 for details.

(2) Preparation of positive electrode: $Na_4Fe_3(PO_4)_2P_2O_7$ as positive electrode active material (with gram specific capacity of 120 mAh/g), polyvinylidene fluoride (PVdF) as the binder, and conductive carbon black (Super-P) as the conductive agent in a ratio of 96%:2%:2% were mixed uniformly in N-methylpyrrolidone solvent to prepare positive electrode slurry; the positive electrode slurry was applied on the surface of the aluminum foil by using a extrusion coater at a weight of positive active material 200 per unit area being 30mg/$cm^2$ and the coating width of 100 mm, and dried; then the coated electrode plate was cold-pressed by using a cold press machine at the designed compaction density of 2.5g/$cm^3$ to prepare the final positive electrode plate.

(3) Preparation of electrolyte: 1 mol/L of $NaPF_6$ dissolved in a mixed solvent of diethylene glycol dimetyyl ether and tetraethylene glycol dimethyl ether in a volume ratio of 1:1 was used as the electrolyte.

(4) Assembling the battery: The negative electrode plate from step (1), the positive electrode plate from step (2), and the separator 300 were cut into corresponding sizes and wound into dry battery cell by a winding machine. After standard technological processes such as welding, packaging with aluminum-plastic film, liquid injection, formation, gas extraction, secondary packaging, and volume fixing, a 20Ah soft-packed sodium metal battery was prepared. The volume of injected electrolyte was set at 3g/Ah.

Example 2

Example 2 was different from Example 1 in that: the step coating 400 had a thickness of 25 $\mu$m and a width of 3 mm, and the distance between the two step coatings 400 was 101 mm.

Example 3

Example 3 was different from Example 1 in that: the step coating 400 had a thickness of 38 $\mu$m and a width of 3 mm, and the distance between the two step coatings 400 is 101 mm.

Example 4

Example 4 was different from Example 1 in that: the step coating 400 had a thickness of 32 $\mu$m and a width of 0.8 mm, and the distance between the two step coatings 400 was 101 mm.

Example 5

Example 5 was different from Example 1 in that: the step coating 400 had a thickness of 32 $\mu$m and a width of 8 mm, and the distance between the two step coatings 400 was 101 mm.

Example 6

Example 6 was different from Example 1 in that: the step coating 400 had a thickness of 32 $\mu$m and a width of 3 mm, and the distance between the two step coatings 400 was 98 mm.

Example 7

Example 7 was different from Example 1 in that: the roughness of the negative electrode current collector was 0.2 $\mu$m.

Example 8

Example 8 was different from Example 1 in that: the roughness of the negative electrode current collector was 1 $\mu$m.

Example 9

Example 9 was different from Example 1 in that: the roughness of the negative electrode current collector was 1.5 $\mu$m.

Example 10

Example 10 was different from Example 1 in that: the roughness of the negative electrode current collector was 2 $\mu$m.

Comparative Example 1

A 12 $\mu$m aluminum foil was directly used as the current collector without application of the step coating 400 , and directly wound with the positive electrode and the separator 300 to prepare the final battery.

Comparative Example 2

Comparative Example 2 was different from Example 1 in that: hard carbon was used as the negative electrode material. Among them, the negative electrode plate was prepared with a mass ratio of hard carbon : CMC : SBR : Super-P of 96.5% : 1% : 1% : 1.5%. The preparation method of the positive electrode plate was referred to for the negative electrode plate, with the mass per unit area of 9.6 mg/cm$^2$ and the compaction density of cold pressing being 1.7g/cm$^3$.

Comparative Example 3

Comparative Example 3 was different from Example 1 in that: a layer of sodium metal with the thickness of 65 $\mu$m was compounded on the surface of the 12 $\mu$m aluminum foil current collector by cold-pressing; then the sodium metal negative electrode, the positive electrode, and the separator 300 were wound to prepare the final battery.

Table 1. List of parameters of positive and negative electrodes in battery cells of Examples and Comparative Examples

| No. | positive electrode | | | | negative electrode | | | | | |
|---|---|---|---|---|---|---|---|---|---|---|
| | types of positive electrode material | gram capacity of positive electrode material, mAh/g | weight of positive active material per unit area, mg/cm$^2$ | width of positive electrode active material, mm | negative electrode material | current collector | roughness of current collector, $\mu$m | thickness of step coating, $\mu$m | width of step coating, mm | distance between two steps, mm |
| Example 1 | Na$_4$Fe$_3$(PO$_4$)$_2$P$_2$O$_7$ | 120 | 30 | 100 | \ | 12$\mu$m Al | 0.3 | 32 | 3 | 101 |
| Example 2 | Na$_4$Fe$_3$(PO$_4$)$_2$P$_2$O$_7$ | 120 | 30 | 100 | \ | 12$\mu$m Al | 0.3 | 25 | 3 | 101 |
| Example 3 | Na$_4$Fe$_3$(PO$_4$)$_2$P$_2$O$_7$ | 120 | 30 | 100 | \ | 12$\mu$m Al | 0.3 | 38 | 3 | 101 |
| Example 4 | Na$_4$Fe$_3$(PO$_4$)$_2$P$_2$O$_7$ | 120 | 30 | 100 | \ | 12$\mu$m Al | 0.3 | 32 | 0.8 | 101 |
| Example 5 | Na$_4$Fe$_3$(PO$_4$)$_2$P$_2$O$_7$ | 120 | 30 | 100 | \ | 12$\mu$m Al | 0.3 | 32 | 8 | 101 |
| Example 6 | Na$_4$Fe$_3$(PO$_4$)$_2$P$_2$O$_7$ | 120 | 30 | 100 | \ | 12$\mu$m Al | 0.3 | 32 | 3 | 98 |
| Example 7 | Na$_4$Fe$_3$(PO$_4$)$_2$P$_2$O$_7$ | 120 | 30 | 100 | \ | 12$\mu$m Al | 0.2 | 32 | 3 | 101 |
| Example 8 | Na$_4$Fe$_3$(PO$_4$)$_2$P$_2$O$_7$ | 120 | 30 | 100 | \ | 12$\mu$m Al | 1 | 32 | 3 | 101 |
| Example 9 | Na$_4$Fe$_3$(PO$_4$)$_2$P$_2$O$_7$ | 120 | 30 | 100 | \ | 12$\mu$m Al | 1.5 | 32 | 3 | 101 |
| Example 10 | Na$_4$Fe$_3$(PO$_4$)$_2$P$_2$O$_7$ | 120 | 30 | 100 | \ | 12$\mu$m Al | 2 | 32 | 3 | 101 |
| Comparative Example 1 | Na$_4$Fe$_3$(PO$_4$)$_2$P$_2$O$_7$ | 120 | 30 | 100 | \ | 12$\mu$m Al | \ | \ | \ | \ |
| Comparative Example 2 | Na$_4$Fe$_3$(PO$_4$)$_2$P$_2$O$_7$ | 120 | 30 | 100 | Hard carbon (400 mAh/g) | 12$\mu$m Al | \ | \ | \ | \ |

| No. | positive electrode | | | | negative electrode | | | | | |
|---|---|---|---|---|---|---|---|---|---|---|
| | types of positive electrode material | gram capacity of positive electrode material, mAh/g | weight of positive active material per unit area, mg/cm$^2$ | width of positive electrode active material, mm | negative electrode material | current collector | roughness of current collector, $\mu$m | thickness of step coating, $\mu$m | width of step coating, mm | distance between two steps, mm |
| Comparative Example 3 | Na$_4$Fe$_3$(PO$_4$)$_2$P$_2$O$_7$ | 120 | 30 | 100 | Na | 12$\mu$m Al | \ | \ | \ | \ |

**Performance Test of battery**

Examples 1 to 10 and Comparative Examples 1 to 3 were tested as follows:

(1) A battery tester was used to conduct charge and discharge tests on the battery cells to evaluate the electrochemical performance of the battery cells. The charge-discharge voltage was set to from 2.5 V to 3.65V, and the charge-discharge current was set to 2A (0.1C), and the corresponding capacity when the battery cell was discharged from 3.65V to 2.5V for the first time and the corresponding capacity after 200 cycles of charge-discharge cycles and the average voltage plateau were recorded.

(2) An electronic balance with an accuracy of one thousandth was used to measure the weight of the battery cell.

(3) A vernier caliper was used to measure the length, width and thickness of battery.

(4) The weight energy density, volume energy density, thickness expansion rate of fully charged battery cells and capacity retention rate after 200 cycles were calculated by the following formulas. The calculation results were shown in Table 2:

$$\text{weight energy density} = \frac{\text{First discharge capacity of battery cell} * \text{average voltage platform}}{\text{weight of battery cell}}$$

$$\text{volume energy density} = \frac{\text{First discharge capacity of battery cell} * \text{average voltage platform}}{\text{length} * \text{width} * \text{thickness of battery cell}}$$

$$\text{thickness expansion rate of fully charged battery cell} = \frac{\text{thickness of battery cell fully charged to 3.65V}}{\text{initial thickness of battery cell}} * 100\%$$

$$\text{capacity retention rate after 200 cycles} = \frac{\text{discharge capacity of battery cell at 200th cycle}}{\text{first discharge capacity of battery cell}} * 100\%$$

Table 2. List of parameters of properties of battery cells of Examples and Comparative Examples

| No. | weight energy density of battery cell, Wh/kg | volume energy density of battery cell, Wh/L | thickness expansion rate of fully charged battery cell | capacity retention rate after 200 cycles |
|---|---|---|---|---|
| Example 1 | 182.3 | 389.1 | 14% | 89% |
| Example 2 | 182.5 | 389.1 | 19% | 83% |
| Example 3 | 169.2 | 372.4 | 15% | 88% |
| Example 4 | 181.8 | 399.5 | 22% | 80% |
| Example 5 | 153.6 | 339.2 | 17% | 85% |
| Example 6 | 173.2 | 381.1 | 27% | 76% |
| Example 7 | 182.4 | 389.2 | 18% | 84% |
| Example 8 | 182.3 | 389.1 | 13% | 90% |
| Example 9 | 182.2 | 389.0 | 15% | 88% |
| Example 10 | 182.3 | 289.1 | 20% | 82% |
| Comparative Example 1 | 190.3 | 405.7 | 36% | 63% |
| Comparative Example 2 | 146.6 | 298.2 | 12% | 95% |
| Comparative Example 3 | 172.7 | 380.5 | 33% | 66% |

It can be seen from the performance of battery cells of the above Examples and Comparative Examples in Table 2 that, although the conventional sodium-ion battery using the method of Comparative Example 2 had good cycle performance, both the weight energy density and volume energy density were low; When the sodium metal negative electrode in Comparative Example 3 was used to replace the hard carbon negative electrode, the energy density of the battery cells was improved, but the structure stability of electrode was significantly reduced due to the high activity of the sodium metal negative electrode and the huge volume expansion during the intercalation/de-intercalation process, resulting in significantly decreased cycle performance of the final battery cell. As shown in Figure 2, when the sodium metal negative electrode was further removed to become a "anode-free" battery cell (Comparative Example 1), the energy density of the battery cell was further higher, but the battery structure after volume expansion was shown in Figure 3, in which the volume expansion of sodium metal negative electrode resulted in expansion and deformation of the negative electrode plate, and the problem of poor structural stability caused by expansion and contraction was still unsolved. In the present application, by introducing the step coating 400 into the "anode-free" battery cell to reserve the space for the deposition and expansion of the negative electrode sodium, the results of structural stability of the battery cells were significantly improved in Examples 1 to 10, while the cycle performance of the battery cell was significantly improved and the comprehensive electrical performance was optimal when the energy density of the cell was only slightly reduced.

Further comparing the performance of battery cells with different step coatings 400 with sizes in negative electrode, it can be seen that when the thickness, width and distance of the step coatings 400 are within the ranges required by this application (Example 1), the weight energy density and volume energy density of the battery cells and the thickness expansion rate of the fully charged battery cells, and the cycle performance are all maintained at the optimal level. When the thickness of the step coating 400 is insufficient (Example 2) or the width is insufficient (Example 4), the space reserved for the step coating 400 is not enough to accommodate the volume of deposited sodium, and the step coating 400 has insufficient strength and is easily damaged during the preparation or operation of the battery cell, both of which lead to the decreased structural stability of the electrode plate, the deteriorated interface of the battery cell, the increased side reactions with the electrolyte, and the decreased cycle performance of the battery cell relative to the optimal level. When the thickness of the step coating 400 is too high (Example 3) or the width is too high (Example 5), the space reserved by the inert step coating 400 and the volume occupied are too large, leading to the significantly decreased volume energy density of the battery cell; and the excess space will easily lead to uneven wetting of the electrolyte, which is also detrimental to the long-term cycle performance of the battery cell. When the spacing of the step coating 400 is smaller than the width of the coating layer of the positive electrode active material 200 (Example 6), part of the sodium de-intercalated from the edge region of the positive electrode is directly deposited on the step coating 400 and easily loses electrical contact to form dead sodium, and the sodium is easy to accumulate and form the dendrites and have increased side reactions with the electrolyte, resulting in a decreased cycle performance of the battery cell and a risk of safety performance at the same time.

Further comparing the performance of the aluminum-based negative electrode current collectors with different roughness values, it can be seen that by using the aluminum-based current collector 500 having a roughness within the ranges required by the application (Example 1, Example 8 and Example 9), an improved bonding force between the deposited sodium and the aluminum-based current collector 500 can be ensured, while maintaining all of the weight energy density, volume energy density of the battery cell, thickness expansion rate, and cycle performance of full-charged battery cell at excellent levels. When the roughness of the aluminum-based current collector 500 is less than 0.3 $\mu$m (Example 7), the cycle life of the cell is reduced. When the roughness of the aluminum-based current collector 500 is greater than 1.5 $\mu$m (Example 10), dendrites are easily formed, reducing the safety of the battery cell.

Based on the above description, the sodium battery containing the step coating 400 in negative electrode in the present application has both high energy density and good cycle stability, significantly improves electrochemical performance of a sodium secondary battery.

The above are only preferred embodiments of the present application, and are not intended to limit the present application. Any modifications, equivalent replacements, improvements, etc. made within the spirit and principles of the present application shall be included in the protection scope of the present application.

**Claims**

1.    An electrochemical device, comprising a positive electrode plate and a negative electrode plate, wherein the positive electrode plate comprises a positive electrode current collector (100) and a positive electrode active material (200), and the negative electrode plate comprises a negative electrode current collector (500) and a group of step coatings disposed on surface of the negative electrode current collector (500) close to the positive electrode plate, and a weight of the positive electrode active material per unit area on the positive electrode current collector is $g_a$ expressed in g/cm$^2$, a gram capacity of the positive active material is $C_a$ expressed in mAh/g, a thickness of the step coating is L expressed in μm, and a theoretical volume gram capacity of sodium metal is X expressed in mAh/cm$^3$, and L satisfies Formula (I):

$$L = \frac{C_a * g_a}{X} * 10000 * (1 \pm 0.1) \qquad \text{(I)}.$$

2. The electrochemical device according to claim 1, wherein a width of the step coating (400) is w expressed in mm, and a width of the negative electrode current collector (500) is W expressed in mm, where $1 \leq w \leq 0.05W$.

3. The electrochemical device according to claim 2, wherein the width W of the negative electrode current collector (500) is 100 mm to 1000 mm, and the width w of the step coating 400 satisfies: $1\ mm \leq w \leq$ (from 5 mm to 50 mm).

4. The method according to any one of claims 1 to 3, wherein, in the step coating (400) comprises at least one of the following technical features:

   (1) The step coating (400) comprises a binder comprising at least one of polyvinylidene fluoride, sodium carboxymethyl cellulose, styrene-butadiene rubber, sodium alginate, lithium polyacrylate, sodium polyacrylate, polytetrafluoroethylene, polyimide, and polyurethane.

5. The method according to any one of claims 1 to 3, wherein, in the step coating (400) comprises at least one of the following technical features:

   (2) The step coating (400) comprises a binder and a ceramic material in a mass ratio of the binder to the ceramic material being (from 1 to 8) : (from 1 to 9);
   (3) The step coating (400) comprises a binder and a ceramic material, and the ceramic material includes at least one of $Al_2O_3$, γ-AlOOH, $SiO_2$, SiC, $Si_3N_4$, AlN, BN, $Al_4C_3$;
   (4) The step coating (400) comprises a binder and a ceramic material, and the binder comprises at least one of polyvinylidene fluoride, sodium carboxymethyl cellulose, styrene-butadiene rubber, sodium alginate, lithium/sodium polyacrylate, polytetrafluoroethylene, polyimide, and polyurethane.

6. The electrochemical device according to any one of claims 1 to 5, wherein the negative electrode current collector (500) comprises at least one of a metal foil current collector, a metal foam current collector, a metal mesh current collector, a carbon felt current collector, a carbon cloth current collector and a carbon paper current collector.

7. The method according to any one of claims 1 to 5, wherein, in negative electrode current collector (500) comprises an aluminum-based current collector comprising at least one of the following technical features:

   (5) The aluminum-based current collector comprises at least one of aluminum foil or aluminum alloy foil;
   (6) The aluminum-based current collector is an aluminum-based composite current collector, and the aluminum-based composite current collector comprises a polymer base film as well as aluminum foils and/or aluminum alloy foils formed on both sides of the polymer base film;
   (7) The aluminum-based current collector is an aluminum-based composite current collector, and the aluminum-based composite current collector comprises a polymer base film as well as aluminum foils and/or aluminum alloy foils formed on both sides of the polymer base film, and the polymer base film is any one of polyamide, polyethylene terephthalate, polyimide, polyethylene, polypropylene, polystyrene, polyvinyl chloride, acrylonitrile-butadiene-styrene copolymer, polybutylene terephthalate, polyparaphenylene terephthalamide, poly(ethylene-co-propylene), polyoxymethylene, epoxy resin, phenolic resin, polytetrafluoroethylene, polyvinylidene fluoride, silicone rubber, and polycarbonate.

8. The electrochemical device according to claim 7, wherein the aluminum-based current collector has a surface roughness of from 0.3 μm to 1.5 μm.

9. The electrochemical device according to any one of claims 1 to 8, wherein a distance between two step coatings (400) is greater than the width of the positive electrode active material (200), and the two step coatings (400) are not directly opposite to the positive electrode active material (200).

10. The electrochemical device according to any one of claims 1 to 9, wherein the positive active material (200) comprises at least one of sodium transition metal oxides, polyanionic compounds, and Prussian blue compounds.

**11.** The electrochemical device according to any one of claims 1 to 10, wherein the step coating (400) can be formed by any one of transfer coating, extrusion coating and spray coating.

**12.** The electrochemical device according to any one of claims 1 to 11, wherein the space formed by the negative electrode current collector (500) and the step coating (400) is used for accommodating the sodium source de-intercalated from the positive electrode plate.

**13.** The electrochemical device according to claim 12, wherein the space formed by the negative electrode current collector (500) and the step coating (400) is of a basin shape.

**14.** An electronic device, comprising the electrochemical device according to any one of claims 1 to 13.

100

200

300

400

500

Fig. 1

100

200

300

500

Fig. 2

100

300

Sodium metal

500

Fig. 3

## INTERNATIONAL SEARCH REPORT

| International application No. |
| --- |
| **PCT/CN2022/077642** |

**A.    CLASSIFICATION OF SUBJECT MATTER**

H01M 4/70(2006.01)i;  H01M 4/134(2010.01)i;  H01M 10/054(2010.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT; ENTXT: 负极, 阳极, 凸台, 凸部, 凸起, 突起, 垛, 凹部, 凹槽, 膨胀, 变形, 形变, 沉积, 析出, negative, anode, project+, protru+, concav+, convex+, expand+, expansion?, deposit+

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 113437354 (NINGDE CONTEMPORARY AMPEREX TECHNOLOGY CO., LTD.) 24 September 2021 (2021-09-24)<br>claims 1-10, and description, paragraphs 41-46 | 1-14 |
| X | CN 110556512 A (PANASONIC INTELLECTUAL PROPERTY MANAGEMENT CO., LTD.) 10 December 2019 (2019-12-10)<br>description, paragraphs 21-104, and figures 1-4 | 1-14 |
| X | CN 1780036 A (KOREA ELECTRONIC TELECOMMUNICATION INSTITUTE) 31 May 2006 (2006-05-31)<br>description, pages 2-5, and figures 1-2 | 1-3, 6-10, 12-14 |
| X | US 2008248386 A1 (OBROVAC, M. N. et al.) 09 October 2008 (2008-10-09)<br>description, paragraphs 33-58, and figure 1e | 1-3, 6-10, 12-14 |
| A | CN 110534789 A (NINGDE CONTEMPORARY AMPEREX TECHNOLOGY CO., LTD.) 03 December 2019 (2019-12-03)<br>entire document | 1-14 |
| A | JP 2009295422 A (SONY CORP.) 17 December 2009 (2009-12-17)<br>entire document | 1-14 |

☑ Further documents are listed in the continuation of Box C.          ☑ See patent family annex.

| | | |
| --- | --- | --- |
| * | Special categories of cited documents: | "T"    later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"    document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"    document member of the same patent family |

| Date of the actual completion of the international search | Date of mailing of the international search report |
| --- | --- |
| **31 March 2022** | **05 May 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/077642** |

**C.     DOCUMENTS CONSIDERED TO BE RELEVANT**

| Category* | Citation of document, with indication, where appropriate, of the relevant passages | Relevant to claim No. |
|---|---|---|
| A | WO 2013128793 A1 (PANASONIC CORP.) 06 September 2013 (2013-09-06)<br>    entire document | 1-14 |

Form PCT/ISA/210 (second sheet) (January 2015)

INTERNATIONAL SEARCH REPORT
Information on patent family members

International application No.

**PCT/CN2022/077642**

| Patent document cited in search report | | | Publication date (day/month/year) | Patent family member(s) | | | Publication date (day/month/year) |
|---|---|---|---|---|---|---|---|
| CN | 113437354 | | 24 September 2021 | None | | | |
| CN | 110556512 | A | 10 December 2019 | EP | 3576183 | A1 | 04 December 2019 |
| | | | | US | 2019372171 | A1 | 05 December 2019 |
| | | | | JP | 2019212601 | A | 12 December 2019 |
| CN | 1780036 | A | 31 May 2006 | CN | 100405640 | C | 23 July 2008 |
| | | | | US | 2006110661 | A1 | 25 May 2006 |
| | | | | JP | 2006156351 | A | 15 June 2006 |
| | | | | KR | 100582557 | B1 | 22 May 2006 |
| | | | | US | 7427455 | B2 | 23 September 2008 |
| US | 2008248386 | A1 | 09 October 2008 | CN | 101652885 | A | 17 February 2010 |
| | | | | KR | 20100015752 | A | 12 February 2010 |
| | | | | WO | 2008124227 | A1 | 16 October 2008 |
| | | | | JP | 2010524177 | A | 15 July 2010 |
| | | | | EP | 2132812 | A1 | 16 December 2009 |
| | | | | TW | 200903887 | A | 16 January 2009 |
| CN | 110534789 | A | 03 December 2019 | EP | 3573145 | A1 | 27 November 2019 |
| | | | | US | 2019363391 | A1 | 28 November 2019 |
| | | | | CN | 110534789 | B | 15 January 2021 |
| | | | | US | 11258091 | B2 | 22 February 2022 |
| | | | | EP | 3573145 | B1 | 23 February 2022 |
| JP | 2009295422 | A | 17 December 2009 | JP | 5499446 | B2 | 21 May 2014 |
| WO | 2013128793 | A1 | 06 September 2013 | JP | 5325358 | B1 | 23 October 2013 |
| | | | | CN | 102593430 | A | 18 July 2012 |
| | | | | CN | 102593430 | B | 29 January 2014 |
| | | | | IN | 201407723 | P1 | 15 May 2015 |
| | | | | WO | 2013128793 | S | 30 July 2015 |

Form PCT/ISA/210 (patent family annex) (January 2015)

**REFERENCES CITED IN THE DESCRIPTION**

**Patent documents cited in the description**

- CN 202110742608